Europäisches Patentamt

European Patent Office

Office européen des brevets

(19)

(11) Veröffentlichungsnummer : **0 148 373**
**B1**

(12)  # EUROPÄISCHE PATENTSCHRIFT

(45) Veröffentlichungstag der Patentschrift :
04.03.87

(51) Int. Cl.⁴ : **F 02 F   3/00, F 16 J   1/16**

(21) Anmeldenummer : **84113822.5**

(22) Anmeldetag : **15.11.84**

(54) **Kolben für Verbrennungsmotoren und/oder für Kompressoren bzw. Pleuel hierfür.**

(30) Priorität : 24.11.83 DE 3342528

(43) Veröffentlichungstag der Anmeldung :
**17.07.85 Patentblatt 85/29**

(45) Bekanntmachung des Hinweises auf die Patenterteilung : **04.03.87 Patentblatt 87/10**

(84) Benannte Vertragsstaaten :
**AT BE CH DE FR GB IT LI LU NL SE**

(56) Entgegenhaltungen :
**EP-A- 0 090 133**
**DE-A- 2 828 402**
**DE-C-   368 705**
**GB-A-   851 322**
**US-A- 2 877 069**
**US-A- 3 402 643**

(73) Patentinhaber : **Alcan Aluminiumwerk Nürnberg GmbH**

**D-6000 Frankfurt/Main (DE)**

(72) Erfinder : **Rösch, Fritz, Dipl.-Ing.**
**Kirchenweg 4**
**D-8540 Schwabach (DE)**

(74) Vertreter : **Füchsle, Klaus, Dipl.-Ing. et al**
**Hoffmann . Eitle & Partner Patentanwälte Arabellastrasse 4**
**D-8000 München 81 (DE)**

EP 0 148 373 B1

## Beschreibung

Die Erfindung betrifft Kolben für Verbrennungsmotoren und/oder für Kompressoren bzw. Pleuel hierfür, wobei der mit einem in Bolzenaugen gelagerten Bolzen verbundene Pleuel dadurch im Kolben axial zum Kolbenbolzen geführt ist, daß der Pleuelkopf und die Bolzenaugen über stirnseitige, sich nur über einen Teil des Bolzen- bzw. Bolzenaugenumfangs erstreckende Gleitanlaufflächen in Anlage stehen.

Bei einem ersten Typ einer Anordnung von Kolben und Pleuel ist der über einen Kolbenbolzen am Kolben angelenkte Pleuel auf der Kurbelwelle geführt. Hierfür sind auf der Kurbelwelle sogenannte Anlaufbunde für die Pleuelführung vorgesehen.

Ein solcher Kolben ist aus der DE-A-28 28 402 bekannt. Hierbei sind für die Aufnahme des Kolbenbolzens Bohrungen vorgesehen, die zur Aufnahme von zylindrischen Büchsen dienen. Diese Aufnahmebüchsen sind auf dem Kolbenbolzen schwimmend vorgesehen.

Zwischen dem auf dem Kolbenbolzen sitzenden Pleuel und dem diesen zugewandten Stirnende der Büchsen sind in Achsrichtung des Kolbenbolzens wirkende Federelemente, insbesondere Schraubenfedern, vorgesehen. Diese Schraubenfedern dienen dazu, die schwimmenden Büchsen von der jeweils gegenüberliegenden Stirnseite des Pleuels fernzuhalten.

Aus der US-A-2 877 069 ist ein ebenfalls auf der Kurbelwelle geführter Pleuel bekannt, welcher über einen aus zwei Teilen bestehenden Kolbenbolzen mit einem Kolben in Verbindung steht. Jedes Kolbenbolzenteil ist an einer anderen Seite des Pleuels im Kolben angeordnet. Die dem Pleuel zugewandten Enden der beiden Kolbenbolzenteile weisen jeweils einen pilzartigen Kopf auf, der in eine entsprechend geformte Ausnehmung im Pleuelkopf eingreift. An beiden Kolbenbolzenteilen greifen Druckfedern an. Diese Federn dienen dazu, die Köpfe der Bolzenteile bei Abrieb an den Kontaktflächen des Pleuelkopfes automatisch nachzudrücken.

Bei den vorgenannten bekannten Kolben ist es aufgrund des großen Spiels des Pleuels in Achsrichtung des Kolbenbolzens notwendig, daß der Pleuel über Anlaufbunde auf der Kurbelwelle geführt wird. Will man nun die Pleuel nicht auf der Kurbelwelle, sondern im Kolben selbst führen, so können zwar die Anlaufbunde auf der Kurbelwelle entfallen, wodurch diese leichter wird. Hieraus ergibt sich jedoch der Nachteil, daß die Biege- und Torsionsschwingungen der leichteren Kurbelwelle vergrößert werden und sich über das Pleuel auf den Kolben übertragen können. Die bekannten Schraubenfedern sind aufgrund des großen Spiels des Pleuelkopfes nicht zur Führung des Pleuels geeignet. Das große Federspiel bietet für den Pleuel keine ausreichende Führungssicherheit. Im Kolben geführte Pleuel dürfen nur ein geringes Spiel in Achsrichtung des Kolbenbolzens aufweisen.

Aus der GB-A-851 322 ist der im Oberbegriff des Patentanspruchs 1 vorausgesetzte, zweite Anordnungstyp bekannt, bei dem der Pleuel im Kolben geführt ist, und zwar im konkreten Fall nur im oberen Bereich der Bolzennaben. Eine Führung des Pleuels nur in einem Teilbereich der angrenzenden Innenfläche der Bolzennaben weist den Vorteil auf, daß sich Ungenauigkeiten bei der Parallelität der Nabeninnenflächen bei der Führung des Pleuels weniger stark bemerkbar machen, als in dem Fall, in dem die gesamte Umfangsfläche der Bolzennaben an dem Pleuel anliegen. Solche Kolben weisen jedoch den Nachteil auf, daß Biege- bzw. Torsionsschwingungen der Kurbelwelle sich direkt auf den Kolben übertragen können. Solche Biege- und Torsionsschwingungen sind besonders nachteilig hinsichtlich ihrer in Bolzenachsrichtung verlaufenden Komponenten. Aufgrund der Pleuelführung im Kolben können solche Beanspruchungen, die darüber hinaus mit Anschlaggeräuschen verbunden sind, nicht reduziert werden. Vergleichbare Kolbenanordnungen sind ferner aus der US-A-3 402 643 und der DE-A-32 11 472 bekannt.

Schließlich betrifft die DE-C-368 705 einen zum zweiten Anordnungstyp gehörenden Kolben, bei dem der Pleuelkopf entweder unmittelbar an den Stirnflächen der Bolzenaugen anliegt oder mittelbar über zwei Blechscheiben. Bei den Blechscheiben wird eine geringe Eigenelastizität gegeben sein, obwohl diese ausdrücklich der Sicherung des Kolbenbolzens und damit des damit drehund verschiebefest verbundenen Pleuelkopfes dienen, so daß sie ihrer Aufgabe entsprechend als starr anzusehen sind.

Es ist daher Aufgabe der Erfindung, ausgehend von einem Kolben der eingangs genannten Art eine weitgehende Beseitigung der Übertragung solcher Biege- und Torsionsschwingungen der Kurbelwelle auf den Kolben zu erreichen, insbesondere die in Achsrichtung des Bolzens verlaufenden Bewegungsstoßkomponenten, so daß zugleich die hiermit verbundenen störenden Geräusche nicht mehr auftreten.

Die Aufgabe wird erfindungsgemäß durch die im Patentanspruch 1 angegebenen Merkmale gelöst.

In vorteilhafter Weise werden die von der Kurbelwelle herrührenden Biege- und Torsionsschwingungen in Bolzenachsrichtung infolge der elastischen Wirkberührung abgefangen. Der Pleuel ist aber nach wie vor allein im Kolben geführt, und zwar durch die Anschlagflächen, die das maximal zulässige Spiel des Pleuels im Kolben begrenzen.

Gemäß einer vorteilhaften Ausgestaltung ist zumindest die Anlauffläche eines der Bolzenaugen und/oder zumindest die Anlauffläche auf einer Seite des Pleuelkopfes gegenüber der jeweils benachbarten Anlauffläche geneigt und eben, und das Bolzenauge und/oder der Pleuelkopf ist im Bereich dieser Anlauffläche zur Bildung mindestens eines im wesentlichen in Richtung der Bolzenachsrichtung federnden Ringsektors mit mindestens einem Schlitz versehen, dessen Sektorfläche kleiner ist als die der Anlauffläche. Dies bedeutet, daß — bezogen auf die Bolzenachse — der durch den Schlitz gebildete Sektor-Winkel kleiner ist als der maximal mögliche Berührungssektorwinkel der Anlauffläche des Bolzenauges oder des Pleuelkopfes.

Hieraus ergibt sich der Vorteil, daß durch die Schlitzbildung in Abhängigkeit von ihrer in Bolzenachsrichtung gesehen mehr oder weniger großen Tiefe ein freistehender Ringbereich am Bolzenauge oder am Pleuelkopf entsteht, der in Bolzenachsrichtung elastisch bewegbar ist. Dieser mit dem Bolzenauge integrierte federnde Ringsektor wirkt gewissermaßen als Dämpfungselement. Zugleich dient dieser Ringsektor der Führung für den Pleuelkopf, so daß eine Führung des Pleuels in der Kurbelwelle nicht notwendig ist. Infolge der Neigung der beiden gegenüberliegenden Anlaufflächen des Bolzenauges und des Pleuelkopfes ergibt sich ein Berührungsteilbereich für den jeweiligen Federringsektor, welcher bei Stoßbeanspruchung in Achsrichtung des Bolzens verschoben wird, wobei mit zunehmender Biegebeanspruchung des Federringsektors der Berührungsbereich vergrößert und die Federwirkung verstärkt wird.

In vorteilhafter Weise sind der Schlitz und die Anlauffläche gegeneinander geneigt, wodurch aufgrund der sich verändernden Dicke des Federringsektors ebenfalls die Federwirkung in gewünschter Weise beeinflußt werden kann. Schlitz und Anlauffläche können aber auch parallel zueinander verlaufen.

Gemäß einer vorteilhaften Ausgestaltung weist die Anlauffläche des Pleuelkopfes oder des Bolzenauges zur Erzielung einer vorgegebenen Federcharakteristik einen vorgegebenen gekrümmten Neigungsverlauf bezogen auf die jeweils gegenüberliegende Anlauffläche auf.

Durch die Wahl der Krümmung entsteht eine Art Steuerkurve, mit der Wirkung, daß mit zunehmender elastischer Verformung des Federringsektors in Bolzenachsrichtung in Abhängigkeit von der Verschiebung in Achsrichtung eine mehr oder weniger schnelle Zunahme der Berührungsflächen zwischen den beiden benachbarten Anlaufflächen entsteht. Hierdurch wird die Federwirkung in gewünschter Weise zur Erzielung einer vorgegebenen Charakteristik beeinflußt.

In vorteilhafter Weise ist der maximale Berührungssektorwinkel ein überstumpfer Winkel. Die Form und die Anordnung der jeweiligen Anlauffläche können aber auch entsprechend dem eingangs genannten Stand der Technik getroffen sein.

Die Federcharakteristik muß dabei nicht auf beiden Seiten des Pleuelkopfes bzw. an beiden Bolzenaugen gleich sein. Unter Umständen kann es vorteilhaft sein, die eine Seite mit einer weicheren, die andere Seite mit einer härteren Dämpfwirkung auszustatten.

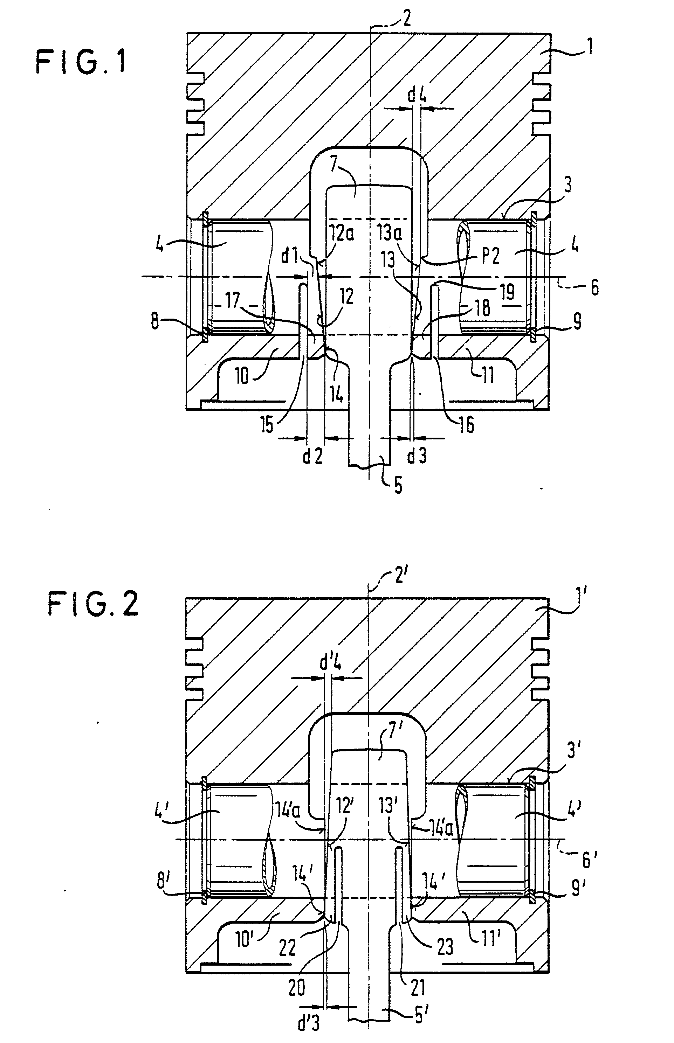

Im folgenden wird die Erfindung anhand zweier, in den Fig. 1 und 2 dargestellter Ausführungsbeispiele beschrieben. Es zeigen :

Figur 1  ein erstes Ausführungsbeispiel mit federndem Schlitzringsektor auf beiden Bolzenaugenseiten und

Figur 2  ein zweites Ausführungsbeispiel mit jeweils einem federnden Ringsektor auf beiden Seiten des Pleuelkopfes.

Gemäß Fig. 1 ist mit 1 ein Kolben bezeichnet, in dem senkrecht zur Kolbenachse 2 eine durchgehende Bohrung 3 vorgesehen ist, die zur Aufnahme eines Bolzens 4 dient, durch den ein Pleuel 5 an den Kolben 1 angelenkt wird. Die Mittelachse des Kolbenbolzens 4 ist mit 6 bezeichnet. Der Kolbenbolzen 4 ist in Fig. 1 und 2 im Bereich des Pleuelkopfes 7 aus Übersichtlichkeitsgründen abgeschnitten dargestellt.

Der Kolbenbolzen 4 ist axial durch je einen Seegerring 8 und 9 gesichert. Der mit der Bohrung 3 versehene Teil des Kolbens bildet ein sogenanntes Bolzenauge 10 bzw. 11 auf jeder Seite des Pleuelkopfes 7. Jedes Bolzenauge bildet auf der dem Pleuelkopf 7 zugewandten Seite eine Anlauffläche 12 bzw. 13, die gegenüber der benachbarten Stirnseite des Pleuelkopfes 7 schräg verläuft (spitzer Winkel). Auf diese Weise entsteht auch auf der Pleuelkopfseite ein Gleit- oder Anlaufflächenbereich 14.

Mit 15 und 16 sind Sektorenschlitze bezeichnet, die eine vorgegebene Breite und in Achsrichtung des Kolbens 1 gesehen eine vorgegebene Tiefe aufweisen, die jedoch nicht bis zur Mittellinie 6 des Bolzens heranreichen. Demzufolge bildet der jeweilige Schlitz 15 bzw. 16 an dem Bolzenauge 10 bzw. 11 einen Ringsektor 17 bzw. 18 aus, der einen Sektorwinkel (bezogen auf die Achse 6) von weniger als 180° umspannt. Aufgrund der elastischen Ausbildung des Materials des Bolzenauges 10 bzw. 11 sowie durch die Schlitze 15 und 16 entsteht konstruktiv ein eigenelastischer und damit federnder Ringsektor 17 bzw. 18 von einer geringsten Breite d1 im achsnahen Bereich 6 und einer größten Breite d2 im Berührungsbereich der Gleit- bzw. Anlauffläche 14.

Mit d3 ist das axiale Spiel des Pleuelkopfes gegenüber dem Bolzenauge bezeichnet, welches auch Null oder auch negativ sein kann, wenn das Pleuel mit einer gewissen Vorspannung gegenüber der federnden Fläche eingebaut wird. d4 ist die maximale lichte Weite bzw. das maximal mögliche Spiel des Pleuelkopfes gegenüber der Anlauffläche 12 bzw. 13 des Bolzenauges 10 bzw. 11 in einer Richtung unter Einbeziehung des maximal möglichen Federweges des federnden Ringsektors 17 bzw. 18. Dieses maximal mögliche Spiel d4 ist naturgemäß größer, als das ungedämpfte statische Ausgangsspiel d3. Es wird bestimmt durch die Anschlagflächen 12a, 13a des ungeschlitzten Bereichs der Stirnfläche des jeweiligen Bolzenauges.

Die in Achsrichtung des Bolzens mögliche Federbewegung des Pleuelkopfes 7 wird begrenzt durch die Berührung der Anlauffläche 13 bzw. 14 mit der benachbarten Stirnseite des Pleuelkopfes im nicht mehr geschlitzten Bereich der Anlaufflächen. Diese Begrenzung des Federweges durch die Berührung der Anlaufflächen mit der jeweils stirnseitigen Anlauffläche des Pleuelkopfes im nicht mehr geschlitzten Bereich verhindert einerseits ein unerwünschtes großes Spiel des Pleuels in axialer Richtung des Kolbenbolzens sowie andererseits auch eine mechanische Überbeanspruchung des federnden Materials im Schlitzgrund.

Das maximal mögliche Spiel d4 ist in Fig. 1 auf das Ende der schräg verlaufenden Anlauffläche 12 bzw. 13 bezogen und nicht auf den Punkt der Anlauffläche, der mit jeweils dem Grund 19 des Schlitzes 16 bzw. 15 fluchtet. Die Überlegung hierfür liegt unter anderem darin, daß aufgrund des in Richtung der Kolbenachse 2 vorhandenen Spiels des Pleuels 5 nicht nur eine Verschiebung des Pleuelkopfes 7 in Richtung der Bolzenachse 6, sondern gleichzeitig eine Verschiebung in Achsrichtung 2 möglich ist, was zu einem leichten Kippen bzw. Verschwenken des Pleuels 5 im Rahmen der Toleranzen führt. Im vorliegenden Falle ist der obere Endpunkt P2 der Anlauffläche 12 bzw. 13 des Bolzenauges 10 bzw. 11 über die Achse 6 des Bolzens 4 nach oben verschoben, was bedeutet, daß der bezogen auf die Bolzenachse 6 gebildete Anlaufringsektor des Bolzenauges größer ist, als der auf die gleiche Bolzenachse 6 bezogene Ringsektor 17 bzw. 18 des Bolzenauges 10 bzw. 11.

Treten nun Biege- bzw. Torsionsschwingungen im nicht dargestellten Kurbelwellenbereich auf, so werden diese über das Pleuel, insbesondere über den Pleuelkopf 7 auf den Kolben 1 übertragen. Hierbei erfolgt eine mehr oder weniger periodische Übertragung der Schwingungs- bzw. Anschlagkräfte auf die Ringsektoren der Bolzenaugen, wobei im Zuge der zunehmenden Beanspruchung durch diese Kräfte der jeweilige Ringsektor axial elastisch verschoben wird. Hierdurch werden die Schwingungskräfte durch die elastischen in Gegenrichtung wirkenden Federkräfte der beiden Ringsektoren 17 bzw. 18 aufgefangen. Die geometrischen Abmessungen der beiden Ringsektoren bilden im Zusammenwirken mit dem E-Modul des Werkstoffes die Federeigenschaften. Durch geeignete Ausbildung der Anlauffläche oder Anlaufschräge 12 bzw. 13 hinsichtlich Form- und Winkelverlauf können die Federwirkungen im Zuge der Auslenkung jedes Federringsektors geeignet gewählt werden, um so z. B. beim Einleiten jeder periodischen Kraftkomponente zunächst eine etwas geringere Federkraft zu haben, die dann im Zuge der elastischen Auslenkung entsprechend zunimmt.

Beim Ausführungsbeispiel gemäß Fig. 2 sind die den Teilen gemäß Fig. 1 entsprechenden Teile mit gleichen Bezugszeichen versehen. Zur Unterscheidung sind sie jedoch mit Indizes versehen.

Im Unterschied zum Ausführungsbeispiel gemäß Fig. 1 sind im zweiten Ausführungsbeispiel die zur elastischen Federbildung vorgesehenen Schlitze 20 und 21 am Pleuelkopf 7' vorgesehen. Die entsprechenden Anschlagflächen am Pleuelkopf sind mit 12', 13' bezeichnet, die Gegenflächen an den Bolzenaugen mit 14'a. Bezogen auf die Bolzenachse 6' umfaßt der federnde Ringsektor 22 bzw. 23 einen Winkelbereich, der kleiner als 180° ist. Die Dicke jedes federnden Ringsektors ist so gewählt, daß einerseits die störenden periodischen Kräfte aufgefangen werden können und andererseits hierbei keine störende Materialbelastung des jeweiligen Ringsektors erfolgt. Des weiteren sind diese Ringsektoren so ausgelegt, daß sie periodische Stöße oberhalb eines bestimmten Kräftepegels wirksam auffangen.

Gemäß einer weiteren jedoch nicht dargestellten Ausführungsform können z. B. auf beiden Seiten des Pleuelkopfes 7 in den Bolzenaugen 10 bzw. 11 mehrere Schlitze hintereinander vorgesehen sein, um auf diese Weise eine kombinierte Federwirkung zu erzielen dergestalt, daß nach Schließen des ersten Ringsektorspaltes der zweite Ringsektor zum Tragen kommt (bei gleichzeitiger Erhöhung der Federkraftwirkung).

**Patentansprüche**

1. Kolben (1) für Verbrennungsmotoren und/oder für Kompressoren bzw. Pleuel (5) hierfür, wobei der mit einem in Bolzenaugen (10, 11 ; 10', 11') gelagerten Bolzen (4 ; 4') verbundene Pleuel (5) dadurch im Kolben (1) axial zum Kolbenbolzen geführt ist, daß der Pleuelkopf (7 ; 7') und die Bolzenaugen (10, 11 ; 10', 11') über stirnseitige, sich nur über einen Teil des Bolzen- bzw. Bolzenaugenumfangs erstreckende Gleitanlaufflächen (12, 13 ; 12', 13', 14, 14') in Anlage stehen, dadurch gekennzeichnet, daß die Gleitanlaufflächen (12, 13 ; 12', 13', 14, 14') der Bolzenaugen (10, 11 ; 10', 11') bzw. des Pleuelkopfes (7 ; 7') konstruktiv eigenelastisch in Bolzenachsrichtung (6 ; 6') ausgebildet sind, und daß zu den Gleitanlaufflächen (12, 13 ; 12', 13', 14, 14') Anschlagflächen (12a, 13a ; 14'a) in Bolzen- bzw. Bolzenaugenumfangsrichtung benachbart sind, die den Federweg der Gleitanlaufflächen (12, 13, 12', 13', 14, 14') auf das zur Führung des Pleuels im Kolben maximal zulässige Spiel (d4, d4') begrenzen.

2. Kolben nach Anspruch 1, dadurch gekennzeichnet, daß zumindest die Anlauffläche (12, 13) eines der Bolzenaugen (10 bzw. 11) und/oder zumindest die Anlauffläche (14') auf einer Seite des Pleuelkopfes (7') gegenüber der jeweils benachbarten Anlauffläche geneigt und eben ist, und daß das Bolzenauge (10, 11) und/oder der Pleuelkopf (7') im Bereich dieser Anlauffläche (12, 13 ; 14') zur Bildung mindestens eines im wesentlichen in Richtung der Bolzenachsrichtung (6, 6') federnden Ringsektors (17, 18 ; 22, 23) mit mindestens einem Schlitz (15, 16 ; 20, 21) versehen ist, dessen Sektorfläche kleiner ist als die der Anlauffläche.

3. Kolben nach Anspruch 2, dadurch gekennzeichnet, daß der Schlitz und die Anlauffläche in einem spitzen Winkel zueinander verlaufen.

4. Kolben nach einem der vorhergehenden Ansprüche, dadurch gekennzeichnet, daß die Anlauffläche des Pleuelkopfes oder des Bolzenauges zur Erzielung einer vorgegebenen Federcharakteristik einen vorgegebenen gekrümmten Neigungsverlauf bezogen auf die jeweils gegenüberliegende Anlauffläche aufweist.

5. Kolben nach einem der vorhergehenden Ansprüche, dadurch gekennzeichnet, daß der maximale Berührungssektorwinkel der Anlauffläche (12, 13 ; 12', 13') größer als 180° ist.

6. Kolben nach einem der vorhergehenden Ansprüche, dadurch gekennzeichnet, daß die Federringsektoren an beiden Seiten des Pleuelkopfes und/oder an den Bolzenaugen unterschiedliche Federcharakteristik aufweisen.

7. Kolben nach einem der vorhergehenden Ansprüche, dadurch gekennzeichnet, daß an jedem Bolzenauge bzw. an jedem Stirnbereich des Pleuelkopfes mehrere Schlitze nebeneinander angeordnet sind.

## Claims

1. Piston (1) for internal combustion engines and/or for compressors and/or connecting rod (5) for this, the said connecting rod (5) being connected with a pin (4 ; 4') journaled in pin bosses (10, 11 ; 10', 11') and being guided in the said piston (1) axially to the gudgeon pin so that the head of the connecting rod (7 ; 7') and the pin bosses (10, 11 ; 10', 11') abut faces of sliding surfaces (12, 13 ; 12', 13', 14, 14') which extend over only a part of the circumference of the pin and pin bosses, characterised in that the sliding surfaces (12, 13 ; 12', 13', 14, 14') of the pin bosses (10, 11 ; 10', 11') or the head of the connecting rod (7 ; 7') respectively are designed constructively to be self-elastic in the axial direction of the pins (6 ; 6'), and that stop faces (12a, 13a ; 14'a) are adjacent to the sliding surfaces (12, 13 ; 12', 13', 14, 14') in the circumferencial direction of the pin or the pin bosses respectively, which limit the spring movement of the spring sliding surfaces (12, 13, 12', 13', 14, 14') to the maximum play (d4, d4') admissible for guiding the connecting rod in the piston.

2. Piston according to claim 1 characterised in that at least the stop face (12, 13) of one of the said pin bosses (10 or 11) and/or at least the stop face (14') on one side of the piston rod head (7') opposite the relevant adjacent stop face is flat and sloping and that the said pin boss (10, 11) and/or the piston rod head (7') is provided in the area of these stop faces (12, 13 ; 14') with at least one slit (15, 16 ; 20, 21) to form at least one sprung ring sector (17, 18 ; 22, 23) mainly in the axial direction of the pins (6, 6') whose sector surface is smaller than the stop face.

3. Piston according to claim 2 characterised in that the slit and the stop face extend in an acute angle to each other.

4. Piston according to one of the previous claims characterised in that the stop face of the piston rod head or of the pin boss is provided with a predetermined curved inclined form with respect to the opposite-facing stop face in each case to obtain a predetermined spring characteristic.

5. Piston according to one of the previous claims characterised in that the maximum touching sector angle of the stop faces (12, 13 ; 12', 13') is greater than 180°.

6. Piston according to one of the previous claims characterised in that the sprung ring sectors on either side of the piston rod head and/or on the pin bosses are provided with different spring characteristics.

7. Piston according to one of the previous claims characterised in that several slits adjacent to each other are arranged on each pin boss or on each front region of the said piston rod head.

## Revendications

1. Piston (1) pour moteurs à combustion interne et/ou pour compresseurs, ou bielle (5) pour ce piston, dans une construction où la bielle (5), reliée à un axe de piston (4 ; 4') monté dans des bossages (10, 11 ; 10', 11'), est guidée dans le piston (1) dans la direction axiale de l'axe de piston, par le fait que le pied de bielle (7 ; 7') et les bossages (10, 11 ; 10', 11') sont en contact, par des surfaces de portée frontales de glissement (12, 13 ; 12', 13', 14, 14') qui ne s'étendent que sur une partie de la circonférence de l'axe de piston ou du bossage, caractérisé en ce que les surfaces de portée à glissement (12, 13 ; 12', 13', 14, 14') des bossages (10, 11 ; 10', 11') ou du pied de bielle (7 ; 7') sont constituées, par construction, avec une élasticité propre dans la direction parallèle à l'axe géométrique (6 ; 6') de l'axe de piston, et en ce que, aux surfaces de portée à glissement (12, 13 ; 12', 13', 14, 14') sont adjacentes, dans la direction circonférentielle de l'axe de piston ou du bossage, des surfaces de butée (12a, 13a, 14'a) qui limitent au jeu (d4, d4') maximum admissible pour le guidage de la bielle dans le piston, la course de débattement élastique des surfaces de portée à glissement (12, 13 ; 12', 13', 14, 14').

2. Piston selon la revendication 1, caractérisé en ce qu'au moins la surface de portée (12, 13) de l'un des bossages (10 ou 11) et/ou au moins la surface de portée (14') située sur un côté du pied de bielle (7') est ou sont inclinée(s) par rapport à la surface de portée respectivement adjacente et plane et en ce que le bossage (10, 11) et/ou le pied de bielle (7') est ou sont muni(s), dans la région de cette surface de portée (12, 13 ; 14'), pour former au moins un secteur annulaire (17, 18 ; 22, 23) élastique sensiblement dans la direction parallèle à l'axe géométrique (6, 6') de l'axe de piston, d'au moins une fente (15, 16 ; 20, 21) dont la surface de secteur est plus petite que celle de la surface de portée.

3. Piston selon la revendication 2, caractérisé en ce que la fente et la surface de portée forment un angle aigu entre elles.

4. Piston selon l'une des revendications précédentes, caractérisé en ce que, pour obtenir une caractéristique élastique prédéterminée, la surface de portée du pied de bielle ou du bossage présente une allure de pente incurvée prédéterminée, par rapport à la surface de portée qui lui fait respectivement face.

5. Piston selon l'une des revendications précédentes, caractérisé en ce que l'angle de secteur de contact maximum de la surface de portée (12, 13 ; 12', 13') est supérieur à 180°.

6. Piston selon l'une des revendications précédentes, caractérisé en ce que les secteurs annulaires élastiques formés sur les deux côtés du pied de bielle et/ou sur les bossages présentent des caractéristiques élastiques différentes.

7. Piston selon l'une des revendications précédentes, caractérisé en ce que, dans chaque bossage ou dans chaque région frontale du pied de bielle, sont disposées plusieurs fentes juxtaposées.

FIG.1

FIG.2